(19) Europäisches Patentamt
European Patent Office
Office européen des brevets

(11) **EP 3 171 324 A1**

(12) **EUROPEAN PATENT APPLICATION**

(43) Date of publication:
**24.05.2017 Bulletin 2017/21**

(51) Int Cl.:
*G06Q 50/00* (2012.01)     *G06F 17/30* (2006.01)

(21) Application number: **15199777.2**

(22) Date of filing: **14.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.11.2015 TW 104138061**

(71) Applicant: **Institute for Information Industry Taipei City 106 (TW)**

(72) Inventors:
• WU, Chia-Chi
  105 Taipei City (TW)
• LIN, Ting-Chia
  414 Taichung City (TW)
• LIN, Grace
  970 Hualien City, Hualien County (TW)
• CHAN, Ya-Hui
  880 Magong City, Penghu County (TW)

(74) Representative: **Viering, Jentschura & Partner mbB**
**Patent- und Rechtsanwälte**
**Kennedydamm 55 / Roßstrasse**
**40476 Düsseldorf (DE)**

(54) **METHOD OF PREDICTING SOCIAL ARTICLE INFLUENCE AND DEVICE USING THE SAME**

(57)     A method of predicting a social article influence includes following steps: a) analyzing an issue on the social article ($content_i$) to classify the social article ($content_i$) into a content domain; b) calculating a term weight to obtain a basic influence ($bci(content_i)$); c) collecting an author's at least one author's historical article, calculating a first influence average value, and subtracting the first influence average value and a first reference influence average value to obtain an author's general influence correction amount ($agi(content_i)$); d) selecting the au- thor's at least one author-domain historical article in the content domain, calculating a second influence average value, and subtracting the second influence average value and a second reference influence average value to obtain an author's domain influence correction amount ($adi(content_i)$); and e) calculating the prediction influence ($pi(content_i)$), the author's general influence correction amount ($agi(content_i)$), and the author's domain influence correction amount ($adi(content_i)$).

receiving social article — S10

analyzing issue to classify the social article into the content domain and the domain issue that the social article belongs — S20

predicting the influence of the social article — S30

building the association model — S40

generating the bulletin object list according to the domain issue, the prediction influence, and the association model of the social article — S50

informing to the corresponding entity according to the bulletin list — S60

FIG.2

**Description**

BACKGROUND OF THE INVENTION

1. Field of the Invention

The instant disclosure relates to a method of predicting a social article influence and a device using the same; in particular, to a method can quickly predicting a social article influence and immediately notice users and a device using the same.

2. Description of Related Art

With the rapid development of technology, message can be more conveniently and quickly transferred. People express their thought and feelings via social media platform that is also an important way for letting government and business can understand the popular will. The published articles might be read by the majority of internet users and gain responses. Specifically, a social article relates to a product on the social media published by a consumer might have a positive advertising effect. Either, a social article published by a public figure might have a negative advertising effect for a certain object.

The social media has high diversity, and the common social media such as Facebook, forum, personal blog, news website, or e-commerce website. Each social media may be a place for generating or dispersing an important public opinion. In order to understand how many influences caused by the published social article, a statistical technique has been developed recently, and it can continuously trace the social media to record the influences on the internet users after the social article being spread. For instance, counting how many "like" being obtained from the internet users for the article on Facebook, or how many responses being obtained from the internet users for the article. In other words, the advertising effect of the social article can be added up and analyzed using the abovementioned statistical technique.

However, the current statistical technique still has several weak points. Firstly, the current statistical technique is used for counting the influences after the social article being spread, but it cannot determine the influences generated from the social article immediately. If the social article has highly negative effect on an enterprise, the enterprise cannot be instantly noticed by the current statistical technique to deal with the situation at once. In addition, the current statistical technique only can be used for analyzing the text of social article, but it cannot be used for incorporating the content, author, and recent news events of the social article.

SUMMARY OF THE INVENTION

An embodiment of this instant disclosure provides a method of predicting a social article influence. The method of predicting the social article influence is adapted to predict a prediction influence of the social article. The prediction influence is an estimate value of an interaction amount obtained from the social article. The method of predicting the social article influence includes following steps: a) analyzing an issue on the social article to classify the social article into a content domain that the social article belongs. b) calculating a term weight of a plurality of terms in the social article to obtain a basic influence according to the term weight, wherein the basic influence is an initial estimate value of the interaction amount obtained from the social article being published after a first predetermined time. c) collecting an author's at least one author's historical article in the social article, calculating a first influence average value according to the interaction amount of the author's historical article, and subtracting the first influence average value and a first reference influence average value to obtain an author's general influence correction amount, wherein the first reference influence average value is an average value of the interaction amount of all of the historical articles. d) selecting the author's at least one author-domain historical article in the content domain, calculating a second influence average value according to the interaction amount of the author-domain historical article, and subtracting the second influence average value and a second reference influence average value to obtain an author's domain influence correction amount, wherein the second reference influence average value is an average value of the interaction amount of all of the historical articles in the content domain. e) calculating the prediction influence according to the basic influence, the author's general influence correction amount, and the author's domain influence correction amount.

An embodiment of this instant disclosure provides a device of predicting a social article influence. The device of predicting a social article influence is adapted to predict a prediction influence of the social article. The prediction influence is an estimate value of an interaction amount obtained from the social article. The device of predicting a social article influence includes an analysis module and a prediction module. The analysis module is used for conducting an issue analysis on the social article to classify the social article into a content domain that the social article belongs. The prediction module is used for generating the prediction influence. The prediction module includes a basic influence estimating unit, a first influence correction amount generating unit, and a calculating unit coupling to the basic influence estimating unit. The basic influence estimating unit couples to the analysis module, and is used for calculating a term weight of a plurality of terms in the social article to obtain a basic influence according to the term weight, wherein the basic influence is an initial estimate value of the interaction amount obtained from the social article being published after a first predetermined time. The first influence correction amount generating unit couples to the analysis module, and is used for generating an author's general influence correction amount and an author's domain influence correction amount. The calculating unit couples to the basic influence estimating unit and the first influence correction amount generating unit, and is used for calculating the prediction influence according to the basic influence, the author's general influence correction amount, and the author's domain influence correction amount. Wherein, the first influence correction amount generating unit is used for collecting an author's at least one author's historical article in the social article, calculating a first influence average value according to the interaction amount of the author's historical article, and subtracting the first influence average value and a first reference influence average value to obtain the author's general influence correction amount. In addition, the first reference influence average value is an average value of the interaction amount of all of the historical articles. Wherein, the first influence correction amount generating unit is used for selecting the author's at least one author-domain historical article in the content domain, calculating a second influence average value according to the interaction amount of the author-domain historical article, and subtracting the second influence average value and a second reference influence average value to obtain the author's domain influence correction amount. In addition, the second reference influence average value is an average value of the interaction amount of all of the historical articles in the content domain.

In summary, the embodiment of this instant disclosure provides the method of predicting the social article influence and the device using the same can analyze the social article and predict its influence before the social article being spread, so that the entity that need to know the social article can be instantly noticed the related information about the social article.

In order to further appreciate the characteristics and technical contents of the instant disclosure, references are hereunder made to the detailed descriptions and appended drawings in connection with the instant disclosure. However, the appended drawings are merely shown for exemplary purposes, rather than being used to restrict the scope of the instant disclosure.

BRIEF DESCRIPTION OF THE DRAWINGS

FIG 1 shows a schematic view of a device of predicting a social article influence of an embodiment in the instant disclosure;

FIG 2 shows a flow chart of a method of predicting a social article influence of an embodiment in the instant disclosure;

FIG 3 shows an operating flow chart of an analysis module of an embodiment in the instant disclosure;

FIG 4 shows a schematic view of a prediction module of an embodiment in the instant disclosure;

FIG 5 shows an operating flow chart of a basic influence estimating unit of an embodiment in the instant disclosure;

FIG 6 shows an operating flow chart of a first influence correction amount generating unit of an embodiment in the instant disclosure; and

FIG 7 shows an operating flow chart of a second influence correction amount generating unit of an embodiment in the instant disclosure.

DETAILED DESCRIPTION OF THE PREFERRED EMBODIMENTS

Embodiments disclosed in the instant disclosure are illustrated via specific examples as follows, and people familiar in the art may easily understand the advantages and efficacies of the instant disclosure by disclosure of the specification. The instant disclosure may be implemented or applied by other different specific examples, and each of the details in the specification may be applied based on different views and may be modified and changed under the existence of the spirit of the instant disclosure. The figures in the instant disclosure are only for brief description, but they are not depicted according to actual size and do not reflect the actual size of the relevant structure. The following embodiments further illustrate related technologies of the instant disclosure in detail, but the scope of the instant disclosure is not limited herein.

Like reference numerals refer to like elements throughout. In the drawings, the dimensions and size of each structure are exaggerated, omitted, or schematically illustrated for convenience in description and clarity. It will be understood that although the terms of first, second, and three are used herein to describe various elements or signals, but these elements or signals should not be limited by these terms. Terms are only used to distinguish one component from other components, or one signal from other signals. Therefore, a component referred to as a first component in one embodiment can be referred to as a second component in another embodiment. The terms of a singular form may include plural forms unless referred to the contrary. In addition, the meaning of 'comprise', 'include', or 'have' specifies a property, a region, a fixed number, a step, a process, an element and/or a component but does not exclude other properties, regions, fixed numbers, steps, processes, elements and/or components.

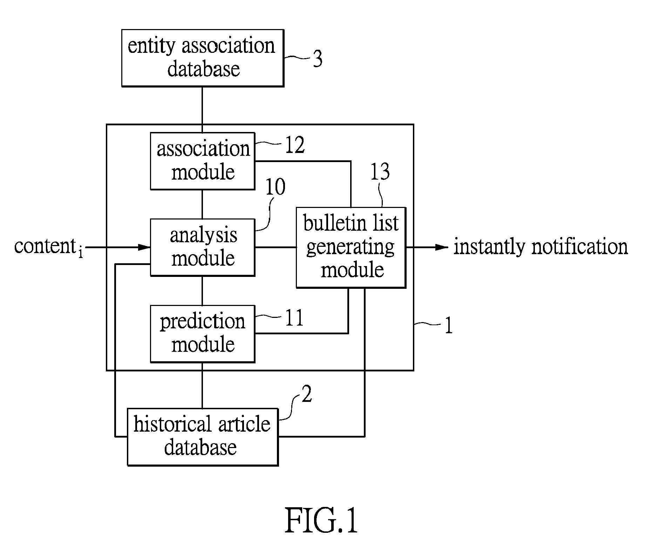

Please refer to FIG 1. FIG 1 shows a schematic view of a device of predicting a social article influence 1 of an embodiment in the instant disclosure. The device of predicting the social article influence 1includes an analysis module 10, a prediction module 11, an association module 12, and a bulletin list generating module 13. The analysis module 10 couples between the prediction module 11 and the association module 12. The bulletin list generating module 13 respectively couples to the analysis module 10, the prediction module 11, and the association module 12. In addition, the analysis module 10, the prediction module 11, and the bulletin list generating module 13 respectively couple to a historical article database 2. The association module 12 couples to an entity association database 3.

The analysis module 10 contains appropriate logic, electric circuit, and/or code to be used for receiving a social article content$_i$, and conducting an issue analysis on the social article content$_i$ to classify the social article content$_i$ into a content domain and a domain issue that the social article content$_i$ belongs according to a historical article provided from the historical article database 2. The historical article may be any public information before publishing the social article content$_i$. The content domain means a domain that the social article content$_i$ belongs, for example, politics, sports, science and technology, or finance. The domain issue means the content of the social article content$_i$ belonging to which issues, for example, the content of the social article content$_i$ discusses about malfunction problems for a certain mobile phone, such that the content domain of the social article content$_i$ is in a mobile phone class in a science and technology domain, and the domain issue of the social article content$_i$ is a malfunction discussion.

The analysis module 10 can further structurize the social article content$_i$ to convert the social article content$_i$ into an easier handling form. For instance, the analysis module 10 carries out hyphenation and speech marks on the social article content$_i$ depending on different languages, and converts the social article content$_i$ into a set composed of text and speech. The technique related to structuring the social article content$_i$ is well known to those of ordinary skill in the art, thus it does not bear repeating herein.

Furthermore, the analysis module 10 can identify an author of the social article content$_i$ and related information. With different social media, the author of the social article content$_i$ may be an account number, an email address, or other social media account which can distinguish different users. The related information may be a group or publication date and time of the social article content$_i$.

The historical article database 2 contains appropriate logic, electric circuit, and/or code to be used for storing all of the social article content$_i$ published on various social media, and providing appropriate historical articles by analyzing requirements of the analysis module 10 and the prediction module 11.

The prediction module 11 contains appropriate logic, electric circuit, and/or code to be used for predicting the influence of the social article content$_i$ according to terms in the social article content$_i$, and correcting the influence of the social article content$_i$ according to the author and latest news events, so as to obtain a prediction influence of the social article content$_i$. The prediction influence is an estimate value of an interaction amount obtained from the published social article content$_i$. In the embodiment of this instant disclosure, the influence is defined as the interaction amount obtained from the social article content$_i$. Speaking to Facebook, the influence may be one of the following situation: the number of "like", reposted times, or message number. Speaking to the social article content$_i$ on a forum, the influence may be the message number left from other users.

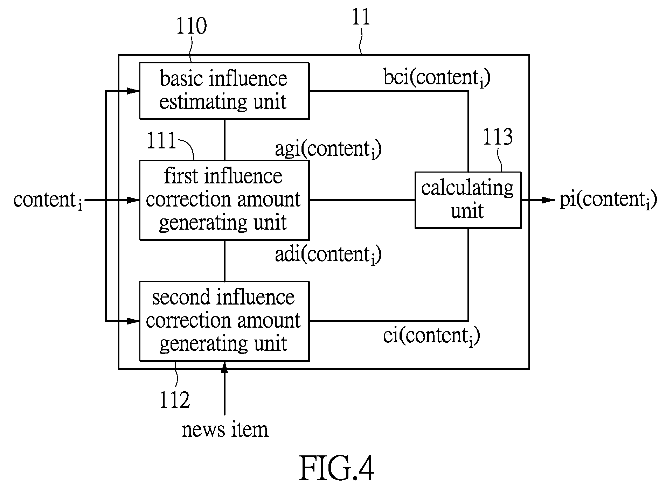

With different social media, the calculation of the influence can be different. In short, the influence of the embodiment of this instant disclosure is defined as the interaction amount obtained from the social article content$_i$. The more interaction amount is obtained from the social article content$_i$, the larger influence that the social article content$_i$ has. On the contrary, the less interaction amount is obtained from the social article content$_i$, the smaller influence that the social article content$_i$ has. The detailed structure and operation about the prediction module 11 will be described in detail in FIG. 4.

The association module 12 contains appropriate logic, electric circuit, and/or code to be used for building an association model according to entity association information provided from the entity association database 3. The entity may be manufacturer, merchandise, brand industry, retailer, supplier, government, or business. The association model includes a plurality of entities associated with the social article content$_i$, and relationships among the plurality of entities, such as product relationships, selling relationships, supply relationships, or competitive relationships.

The entity association database 3 contains appropriate logic, electric circuit, and/or code to be used for storing various kinds of the entity association information. For instance, the entity association database 3 stores the association model of various expert knowledge, internet information, or other historical article. According to the entity association information provided from the entity association database 3, the association module 12 can analyze different types of relationships among the entities to build the association model of the social article content$_i$.

The bulletin list generating module contains appropriate logic, electric circuit, and/or code to be used for generating a bulletin object list according to the domain issue provided from the analysis module 10, the prediction influence provided from the prediction module 11, and the association model provided from the association module 12, and immediately noticing the corresponding entities according to the bulletin object list. The bulletin object list includes at least one entity, and the entity listed in the bulletin object list may require to be immediately informed with the social article content$_i$.

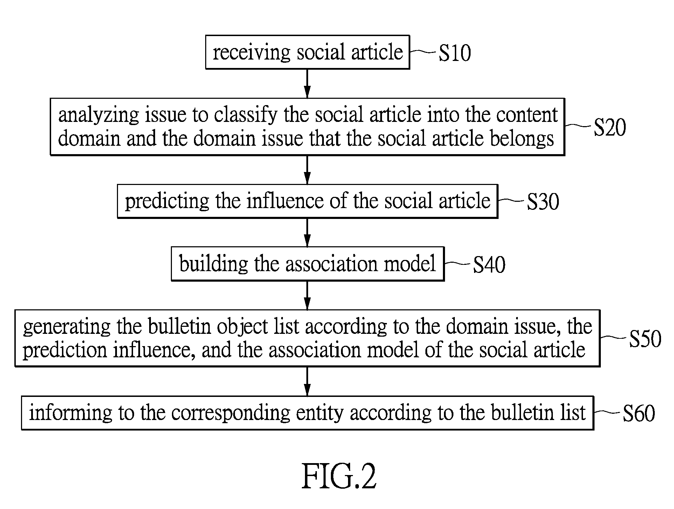

Please refer to FIGs 1 and 2. FIG 2 shows a flow chart of a method of predicting a social article influence of an embodiment in the instant disclosure. The method of predicting the social article influence shown in FIG 2 is adapted to the abovementioned device of predicting the social article influence 1. In step S10, the analysis module 10 receives the social article content$_i$ and structurizes the social article content$_i$ to obtain the author and the related information of the social article content$_i$. Additionally, the analysis module 10 exports the structurized social article content$_i$ to the prediction module 11 and the association module 12, so that the prediction module 11 and the association module 12 can conduct subsequent process.

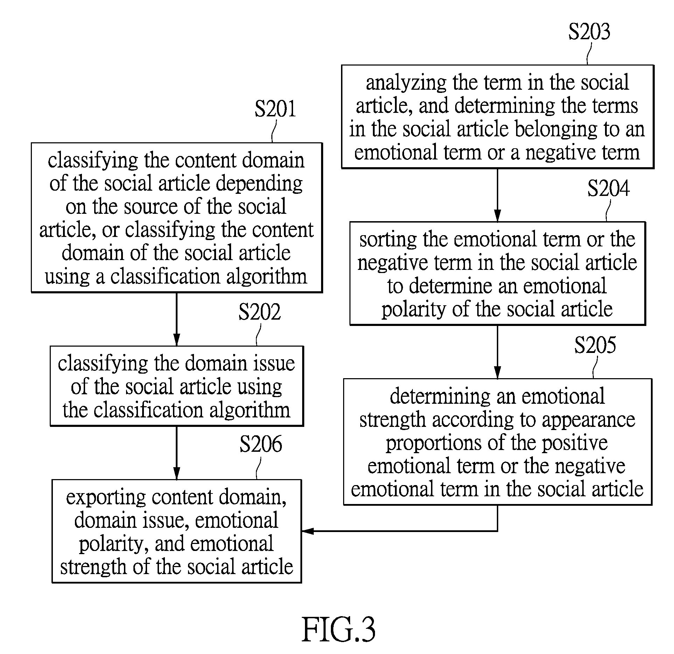

In step S20, the analysis module 10 conducts the issue analysis on the social article content$_i$ to classify the social article content$_i$ into the content domain and the domain issue that the social article content$_i$ belongs. The process of the analysis module 10 classifying the social article content$_i$ into the content domain and the domain issue will be further described in FIG. 3 and the following paragraph.

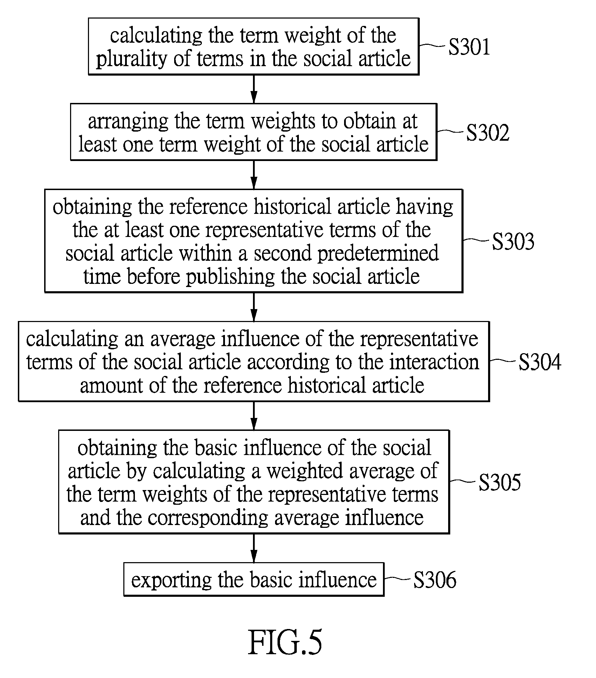

In step S30, the prediction module 11 calculates the prediction influence according to the structurized social article content$_i$. The process of the prediction module 11 calculating the prediction influence will be further described in following paragraphs and FIGs 4 and 5.

In step S40, the association module 12 builds the association model among the plurality of entities according to the expert knowledge, internet information, or historical article provided from the entity association database 3, and provides the association model to the bulletin list generating module 13. As mentioned above, the association model provides a plurality of relationships among the entities associated with the social article content$_i$.

In step S50, the bulletin list generating module 13 generates the bulletin object list according to the domain issue, the prediction influence, and the association model of the social article content$_i$. The bulletin object list includes at least one entity, and the entities listed in the bulletin object list are simultaneously existed in the association model. In step S60, the bulletin list generating module 13 informs to the corresponding entity according to the bulletin list.

The embodiment of this instant disclosure provides two methods for generating the bulletin list. One of the methods is to analyze the historical article of each of the entities, and train the bulletin list generating module 13 using an algorithm method such as decision tree or Support Vector Machine (SVM) to determine whether informing the corresponding entity instantly. Specifically, the bulletin list generating module 13 obtains at least one certain historical article associated with a first entity from the historical article database 2 to analyze the domain issue, the prediction influence, and the association model of the certain historical article. The bulletin list generating module 13 determines an emergency level of the first entity with regard to the social article content$_i$ based on the certain historical article. The certain historical article has a high influence for the first entity.

Another method is that, each of the entities can initiatively provide its own specified criteria to formulate a rule for receiving an emergency notification. The specified criteria includes an expected influence threshold, at least one specified issue, and at least one specified entity. When the bulletin list generating module 13 judges the prediction influence of the social article content$_i$ being larger than the expected influence threshold, the domain issue of the social article content$_i$ appearing in the specified issue, and the association model of the social article content$_i$ including the specified entity, the bulletin list generating module 13 generates the bulletin object list to notice the entity that formulates the specified criteria.

For example, the specified criteria provided from a second entity has set rules regarding that, the expected influence threshold is 150, the specified issue is "malfunction", and the specified entity is "Pchome". When the bulletin list generating module 13 judges the prediction influence being larger than 150, the domain issue of the social article content$_i$ being "malfunction", and the association model including "Pchome", the bulletin list generating module 13 sends an instant notification to the second entity.

The following description illustrates the analysis module 10 how to classify the content domain and domain issue that the social article content$_i$ belongs. Please refer to FIG. 3. FIG 3 shows an operating flow chart of an analysis module of an embodiment in the instant disclosure. In step S201, the analysis module 10 classifies the content domain of the social article content$_i$ depending on the source of the social article content$_i$. According to different social media, the analysis module 10 can directly determine the content domain depending on the source of the social article content$_i$. For example, the analysis module 10 can classify the social article content$_i$ published in a forum for mobile version into a mobile phone domain.

Either, the analysis module 10 classifies the content domain of the social article content$_i$ using a classification algorithm. The analysis module 10 obtains the historical article from the historical article database 2, sorts the historical article being marked with its content domain to be as a training information, and trains a classifier (not shown) inside of the analysis module 10 using the classification algorithm such as decision tree or Support Vector Machine (SVM) to achieve a purpose of classifying the content domain. The method of decision tree or SVM is well known to those of ordinary skill in the art, thus it does not bear repeating herein.

In step S202, the analysis module 10 can use the historical article being marked with its domain issue to be as the training information, and train the classifier (not shown) inside of the analysis module 10 using the classification algorithm such as decision tree or SVM to achieve a purpose of classifying the domain issue.

Furthermore, the analysis module 10 can further analyze an emotion of the social article content$_i$. In step S203, the analysis module 10 determines the terms in the social article content$_i$ belonging to an emotional term or a negative term according to an emotional term database or a negative term database (not shown). The emotional term has a positive emotional term with positive semantic e.g., good, like, or happy. Or, the emotional term has a negative emotional term with negative semantic e.g., hate or dirty. The negative term has an opposite semantic e.g., bad, or no. The negative term will influence the polarity of the emotional term. When the emotional term and the negative term simultaneously appear in a sentence, a polarity of the sentence needs to be corrected. For example, when the positive emotional term is added behind the negative term, the positive emotional term is converted into the negative emotional term and vice versa. The analysis module 10 determines the term in the social article content$_i$ belongs to the positive emotional term or the negative emotional term, and simultaneously determines that is there any negative term being added in front of the emotional term, so as to correct the polarity of the term.

In step S204, the analysis module 10 sorts the emotional term or the negative term in the social article content$_i$ to determine an emotional polarity of the social article content$_i$. When the emotional polarity is larger than 0, it represents the social article content$_i$ belonging to a positive emotion. Otherwise, when the emotional polarity is smaller than 0, it represents the social article content$_i$ belonging to a negative emotion.

In step S205, the analysis module 10 determines an emotional strength according to appearance proportions of the positive emotional term or the negative emotional term in the social article content$_i$. When the positive emotional term or the negative emotional term has higher proportions in the social article content$_i$, the emotional strength is stronger. For instance, when the positive emotional term appears frequently in the social article content$_i$, the analysis module 10 will determine the emotional strength of the social article content$_i$ being extremely positive. Otherwise, when the negative emotional term appears frequently in the social article content$_i$, the analysis module 10 will determine the emotional strength of the social article content$_i$ being extremely negative.

In step S206, the analysis module 10 exports the emotional polarity and the emotional strength of the social article content$_i$ to the prediction module 11, such that the bulletin list generating module 13 can determine the emergency level of the social article content$_i$. The bulletin list generating module 13 can be set to export the instant notification to the corresponding entity when the social article content$_i$ is determined to be extremely negative.

It should be noted that, the analysis module 10 of the embodiment is not limited to be necessary analyzing the emotional polarity and the emotional strength of the social article content$_i$. The bulletin list generating module 13 also can predict the prediction influence of the social article content$_i$ only according to the content domain and the domain issue that the social article content$_i$ belongs without consideration of the emotional polarity and the emotional strength of the social article content$_i$. However, in order to accurately assess the emergency level of the social article content$_i$, the analysis module 10 of the embodiment will analyze the content domain, the domain issue, the emotional polarity, and the emotional strength of the social article content$_i$ at the same time, such that bulletin list generating module 13 can completely consider if the social article content$_i$ is in emergency.

The following description illustrates the structure and operation of the prediction module 11. Please refer to FIG. 4. FIG 4 shows a schematic view of a prediction module of an embodiment in the instant disclosure. The prediction module 11 includes a basic influence estimating unit 110, a first influence correction amount generating unit 111, a second influence correction amount generating unit 112, and a calculating unit 113. The basic influence estimating unit 110, the first influence correction amount generating unit 111, and the second influence correction amount generating unit 112 respectively couple to the analysis module 10 (as shown in FIG. 1). The calculating unit 113 couples to the basic influence estimating unit 110, the first influence correction amount generating unit 111, the second influence correction amount generating unit 112, and the bulletin list generating module 13 (as shown in FIG. 1). The second influence correction amount generating unit 112 also couples to the historical article database 2 (as shown in FIG. 1).

The basic influence estimating unit 110 contains appropriate logic, electric circuit, and/or code to be used for receiving the structurized social article content$_i$ provided from the analysis module 10. The basic influence estimating unit 110 calculates each of term weights of a plurality of terms ($term_1$, $term_2$...$term_m$) in the social article content$_i$ to obtain a basic influence bci(content$_i$) according to the term weight, wherein m represents an integer which is larger than 1. The basic influence bci(content$_i$) is an initial estimate value of the interaction amount obtained from the social article content$_i$ being published after a first predetermined time p1. An example of the first predetermined time p1 is one day, but it is not limited herein. The detailed process of the basic influence estimating unit 110 calculating the basic influence bci(content$_i$) will be described in details in following paragraphs and FIG. 5.

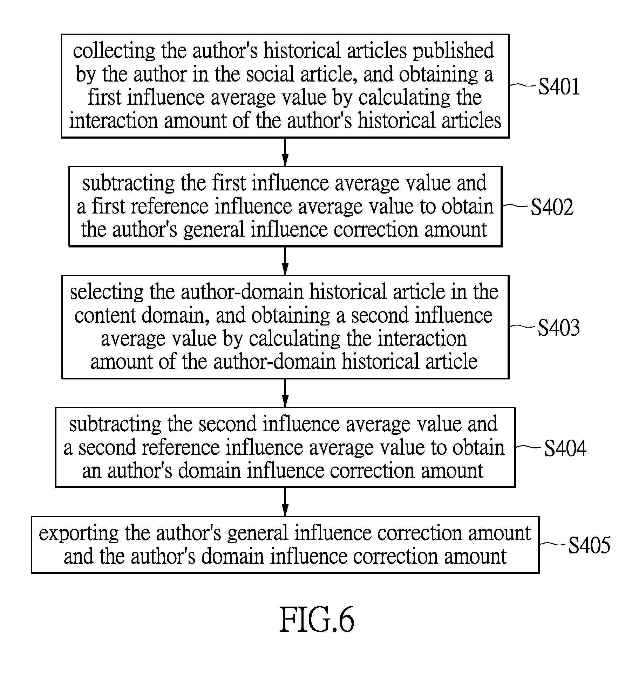

The first influence correction amount generating unit 111 contains appropriate logic, electric circuit, and/or code to be used for receiving the structurized social article content$_i$ provided from the analysis module 10, and generating an author's general influence correction amount agi(content$_i$) and an author's domain influence correction amount adi(content$_i$) according to the historical article published by the social article content$_i$'s author. Then, the first influence correction amount generating unit 111 exports the author's general influence correction amount agi(content$_i$) and the author's domain influence correction amount adi(content$_i$) to the calculating unit 113, so that the calculating unit 113 incorporates the influence caused by the author affecting the prediction influence of the social article content$_i$ into consideration. The detailed process of the first influence correction amount generating unit 111 calculating the author's general influence correction amount agi(content$_i$) and the author's domain influence correction amount adi(content$_i$) will be further described in following paragraphs and FIG. 6.

The second influence correction amount generating unit 112 contains appropriate logic, electric circuit, and/or code to be used for receiving the structurized social article content$_i$ provided from the analysis module 10, and determining at least one news events that the social article content$_i$ belongs according to each of the term weights of the terms in the social article content$_i$. The second influence correction amount generating unit 112 calculates an event influence correction amount ei(content$_i$) according to the news events. Each of the news events includes at least one news item which has an identical feature with the social article content$_i$. Either, the social article content$_i$ may not belong to any news events, that is, the social article content$_i$ is not associated with all of the news events. At this time, the event influence correction amount ei(content$_i$) of the social article content$_i$ is 0.

By the way, the difference between the news item and the abovementioned historical article is, the news item is a news article which is published from a certain news media, and a content of the news item describes a certain news event. The historical article widely refers various social article content$_i$, and the historical article may be a topic discussion article or a mood sharing article published from the user of the social media. The content of the historical article may be associated with the news event, but also may be not associated with the news event.

In view of the news events, a news event may never be discussed, or the user is not interested in the news event, such that the news event is not associated with any social article content$_i$ or any historical article. If a news event is not associated with the social article content$_i$, and the news event does not cause any effect on the event influence correction amount ei(content$_i$) of the social article content$_i$.

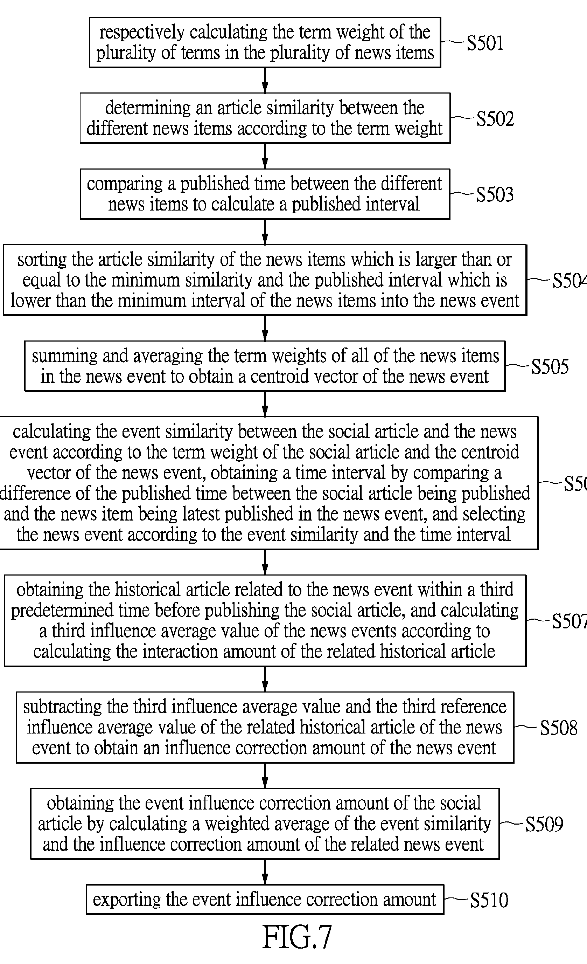

Next, the second influence correction amount generating unit 112 exports the event influence correction amount ei(content$_i$) to the calculating unit 113, and the calculating unit 113 incorporates the influence caused by the latest news events affecting the prediction influence of the social article content$_i$ into consideration. The detailed process of the second influence correction amount generating unit 112 calculating the event influence correction amount ei(content$_i$) will be further described in following paragraphs and FIG 7.

The calculating unit 113 contains appropriate logic, electric circuit, and/or code to be used for calculating the prediction influence pi(content$_i$) according to the basic influence bci(content$_i$), the author's general influence correction amount agi(content$_i$), the author's domain influence correction amount adi(content$_i$), and the event influence correction amount ei(content$_i$).

It is worth mentioning that, in other embodiments, the prediction module 11 may not include the second influence correction amount generating unit 112. At this time, the calculating unit 113 calculates the prediction influence pi(content$_i$) only according to the basic influence bci(content$_i$), the author's general influence correction amount agi(content$_i$), and the author's domain influence correction amount adi(content$_i$). However, in order to accurately predict the prediction influence pi(content$_i$) of the social article content$_i$, the prediction module 11 of this embodiment includes the second influence correction amount generating unit 112, such that the calculating unit 113 can predict the prediction influence pi(content$_i$) from different dimensions.

The process of the basic influence estimating unit 110 calculating the basic influence bci(content$_i$) will be described as below. Please refer to FIG. 5. FIG 5 shows an operating flow chart of a basic influence estimating unit of an embodiment in the instant disclosure. In step S301, the basic influence estimating unit 110 picks up keywords from the plurality of terms (term$_1$, term$_2$...term$_m$) in the social article content$_i$ to calculate the term weight w(i,term$_k$) of the plurality of terms using a Term Frequency-Inverse Document Frequency (TF-IDF) method (as shown in following Equation (1)), wherein k represents an integer between 1 to m.

$$w(i, term_k) = (1 + \log f_{ik}) * \log \frac{N}{f_k} \qquad\qquad Equation\ (1)$$

Wherein, $f_{ik}$ represents the frequency of term$_k$ appearing in the social article content$_i$; $f_k$ represents the number of the historical article containing term$_k$; N represents the number of the historical article in the historical article database 2.

In step S302, after obtaining each of the term weights w(i,term$_1$) to w(i,term$_m$) of the plurality of terms (term$_1$, term$_2$...term$_m$), the basic influence estimating unit 110 arranges the term weights w(i,term$_1$) to w(i,term$_m$) in accordance with the sort order, and the top x ranking in the term weights w(i,term$_1$) to w(i,term$_m$) will be chosen as representative terms (kw$_1$, kw$_2$...kw$_x$) of the social article content$_i$. For example, if x is 5, the basic influence estimating unit 110 will pick up the top 5 ranking in the term weights w(i,term$_1$) to w(i,term$_m$) to be as the representative terms (kw$_1$, kw$_2$...kw$_x$). The

basic influence $bci(content_i)$ of the social article $content_i$ can be assessed by estimating the influence of the representative terms $(kw_1, kw_2...kw_x)$.

In step S303, the basic influence estimating unit 110 obtains at least one reference historical article $content_j$ having the at least one representative terms $(kw_1, kw_2...kw_x)$ of the social article $content_i$ within a second predetermined time p2 before publishing the social article $content_i$. In other words, the keyword of the reference historical article $content_j$ is chosen from the at least one representative terms $(kw_1, kw_2...kw_x)$. An example of the second predetermined time p2 is one month, but it is not limited herein.

In step S304, the basic influence estimating unit 110 calculates an average influence $ati(kw_k)$ of each of the representative terms $(kw_1, kw_2...kw_x)$ of the social article $content_i$ within the second predetermined time p2 before publishing the social article $content_i$ according to the interaction amount of the reference historical article $content_j$, wherein k is an integer between 1 to x, it is shown in equation (2) as below:

$$ati(kw_k) = \begin{cases} 0, & if\ |CK| = 0 \\ \dfrac{1}{|CK|} * \displaystyle\sum_{\forall content_j \in CK} |UID_t(j)|, & else \end{cases} \qquad Equation\ (2)$$

Wherein, CK represents a set composed of all of the reference historical article $content_j$ having the representative term chosen from the representative terms $kw_k$; $|UID_t(j)|$ represents the interaction amount obtained from the reference historical article $content_j$ being published after time t.

In step S305, the basic influence estimating unit 110 obtains the basic influence $bci(content_i)$ of the social article $content_i$ by calculating a weighted average of each of the term weights $w(i,term_1)$ to $w(i,term_x)$ of the representative terms $(kw_1, kw_2...kw_x)$ and the corresponding average influence $ati(kw_1)$ to $ati(kw_x)$, and it is shown in equation (3) as below:

$$bci(content_i) = \sum_{s=1\sim x} \left( ati(kw_s) * \frac{w(i,kw_s)}{\displaystyle\sum_{l=1\sim x} w(i,kw_l)} \right) \qquad Equation\ (3)$$

Wherein, $ati(kw_s)$ represents the average influence within the second predetermined time p2.

In step S306, the basic influence estimating unit 110 exports the basic influence $bci(content_i)$ to the calculating unit 113 to provide to the calculating unit 113 conducing the subsequent calculation.

The process of the first influence correction amount generating unit 111 calculating the author's general influence correction amount $agi(content_i)$ and the author's domain influence correction amount $adi(content_i)$ will be described as below. Please refer to FIG. 6. FIG 6 shows an operating flow chart of a first influence correction amount generating unit of an embodiment in the instant disclosure. In step S401, the first influence correction amount generating unit 111 collects all of author's historical articles published by the author in the social article $content_i$. The first influence correction amount generating unit 111 obtains a first influence average value by summing and averaging the interaction amount of the author's historical articles. The first influence average value represents the influence of all of the author's historical articles being published by the author. If the author has published only one author's historical article, and the influence of the author's historical article is the first influence average value.

In step S402, first, the first influence correction amount generating unit 111 sums and averages the interaction amount of all of the historical articles in the historical article database 2 to obtain the first influence average value of all of the past historical articles.

Next, the first influence correction amount generating unit 111 subtracts the first influence average value and a first reference influence average value to obtain the author's general influence correction amount $agi(content_i)$. The author's general influence correction amount $agi(content_i)$ may be a positive value or a negative value.

In step S403, the first influence correction amount generating unit 111 selects all of author-domain historical articles in the content domain being published in the social article $content_i$ by the author. The first influence correction amount generating unit 111 obtains a second influence average value by summing and averaging the interaction amount of the author-domain historical articles. The second reference influence represents the influence of all of the author-domain historical articles being published in the content domain by the author. If the author has published only one author-domain historical article, and the influence of the author-domain historical article is the second influence average value.

In step S404, the first influence correction amount generating unit 111 obtains a second reference influence average value of all of the past historical articles in the content domain by summing and averaging the interaction amount of all of the historical articles of the content domain in the historical article database 2.

Next, the first influence correction amount generating unit 111 subtracts the second influence average value and a second reference influence average value to obtain an author's domain influence correction amount $adi(content_i)$. The author's domain influence correction amount $adi(content_i)$ may be a positive value or a negative value. The author's domain influence correction amount $adi(content_i)$ is higher, the author has higher influence in the content domain.

In step S405, the first influence correction amount generating unit 111 exports the author's general influence correction amount $agi(content_i)$ and the author's domain influence correction amount $adi(content_i)$ to the calculating unit 113 to provide to the calculating unit 113 conducing the subsequent calculation.

The process of the second influence correction amount generating unit 112 calculating the event influence correction amount $ei(content_i)$ will be described as below. Please refer to FIG. 7. FIG 7 shows an operating flow chart of a second influence correction amount generating unit of an embodiment in the instant disclosure. In order to calculate the event influence correction amount $ei(content_i)$, firstly, the second influence correction amount generating unit 112 has to detect which news event $event_j$ is the social article $content_i$ belonging. A source and content of the news item in the news event $event_j$ may be different from the social article $content_i$, but the news item and the social article $content_i$ report the same event. For instance, the news item and the social article $content_i$ may report the information of the same mobile phone product via different social media and with different point of views. Furthermore, the social article $content_i$ also may be classified in the plurality of the news event $event_j$ simultaneously.

In step S501, the second influence correction amount generating unit 112 respectively calculates the term weight of the plurality of terms in the news items using the TF-IDF method, so as to vectorize the news items. In step S502, the second influence correction amount generating unit 112 determines an article similarity between the different news items according to the term weight of the news items, and selects the news items by a minimum similarity. If two news items (e.g., first news item and second news item) have similar term weights, it represents that the first news item and the second news item have high similarity. Similar terms are usually used in an identical news item of the news event. Therefore, if the term weights of the news items having similar distributions, the news items are determined to belong to the same news event. If the article similarity between the first news item and the second news item is larger than or equal to a minimum similarity, and the first news item and the second news item will be listed into the identical news event $event_j$. An example of the minimum similarity is 0.5, but it is not limited herein.

In step S503, the second influence correction amount generating unit 112 compares a published time between the different news items to calculate a published interval, so as to avoid the news items having too far apart published interval to be incorporated to calculate. If the published interval between the published time of the first news item and the published time of the second news item is larger than a minimum interval, the earlier published news item would be not listed in the news event $event_j$. An example of the minimum interval is one month, but it is not limited herein.

In step S504, the second influence correction amount generating unit 112 uses the minimum similarity and the minimum interval as a threshold to generate the news event $event_j$ using a method of hierarchical clustering algorithm. The second influence correction amount generating unit 112 sorts the article similarity of the news items which is larger than or equal to the minimum similarity and the published interval which is lower than the minimum interval of the news items into the news event $event_j$. Briefly, the second influence correction amount generating unit 112 sorts the news items having similar contents and similar published times into a news event $event_j$.

If the social article $content_i$ has popular content domain and domain issue, the second influence correction amount generating unit 112 may sort out the plurality of news event $event_j$ which is associated with the social article $content_i$. At this time, the second influence correction amount generating unit 112 will respectively evaluate the event influence correction amount $ei(content_i)$ of the social article $content_i$ from the point of view of the news event $event_j$.

Next, the second influence correction amount generating unit 112 further uses the news event $event_j$ to calculate the event influence correction amount $ei(content_i)$ of the social article $content_i$. In step S505, the second influence correction amount generating unit 112 sums and averages the term weights of all of the news items in the news event $event_j$ to obtain a centroid vector $event(w_{j1}, w_{j2},...,w_{jx})$ of the news event $event_j$. The centroid vector $event(w_{j1}, w_{j2},...,w_{jx})$ represents a term vector of the news event $event_j$.

In the step S506, the second influence correction amount generating unit 112 uses an IF-IDF method to convert the social article $content_i$ into the term vector $content_i(w_{i1}, w_{i2},...,w_{ix})$, wherein $w_{in}$ represents the term weight $w(i,term_n)$ of the term $(term_n)$ in the social article $content_i$, and n represents an integer between 1 to x. The second influence correction amount generating unit 112 calculates the event similarity $cos\_sim(content_i, event_j)$ between the social article $content_i$ and the news event $event_j$ using the following equation (4).

$$\cos\_sim(content_i, enent_j) = \frac{\sum_{h=1}^{x} w_{ih} w_{jh}}{\sqrt{\left[\sum_{h=1}^{x} w_{ih}^2\right] \left[\sum_{h=1}^{x} w_{jh}^2\right]}} \qquad Equation\ (4)$$

Wherein, if an included angle of the term vector $content_i(w_{i1}, w_{i2},...,w_{ix})$ and the centroid vector $event(w_{j1}, w_{j2},...,w_{jx})$ is smaller, it represents the event similarity $cos\_sim(content_i, event_j)$ between the social article $content_i$ and the news event $event_j$ is higher.

In other embodiments, the second influence correction amount generating unit 112 also may conduct the calculation without use of the centroid vector $event(w_{j1}, w_{j2},...,w_{jx})$. The second influence correction amount generating unit 112 can respectively calculates the term vector $content_i(w_{i1}, w_{i2},...,w_{ix})$ and the centroid vector $event(w_{j1}, w_{j2},...,w_{jx})$ having a plurality of similarity among all of the news items, and sums and averages the plurality of similarity to be as the $cos\_sim(content_i, event_j)$.

Then, the second influence correction amount generating unit 112 obtains a time interval by comparing a difference of the published time between the social article $content_i$ being published and the news item being latest published in the news event $event_j$, and selects the news event $event_j$ related to the social article $content_i$ according to the event similarity $cos\_sim(content_i, event_j)$ and the time interval. If the event similarity $cos\_sim(content_i, event_j)$ of the social article $content_i$ and the news event $event_j$ is larger than or equal to a similarity threshold, and the time interval is lower than a time threshold, the second influence correction amount generating unit 112 will determine the social article $content_i$ is associated with the news event $event_j$.

In step S507, with regard to each of the news events $event_j$, the second influence correction amount generating unit 112 obtains all of the historical articles related to the news event $event_j$ from the historical article database 2 within a third predetermined time p3 before publishing the social article $content_i$. The second influence correction amount generating unit 112 calculates a third influence average value of each of the news events $event_j$ according to summing and averaging the interaction amount of the related historical article. In this embodiment, the third predetermined time p3 is the same as the abovementioned second predetermined time p2, but it is not limited herein. After that, the second influence correction amount generating unit 112 obtains all of the historical articles from the historical article database 2 within the third predetermined time p3 before publishing the social article $content_i$, and sums and averages the interaction amount of all of the historical articles to obtain a third reference influence average value.

In step S508, with regard to each of the news events $event_j$, the second influence correction amount generating unit 112 subtracts the third influence average value and the third reference influence average value of the related historical article of the news event $event_j$ to obtain an influence correction amount $pei(event_j)$ of the news event $event_j$.

In step S509, with regard to the social article $content_i$, the second influence correction amount generating unit 112 obtains the event influence correction amount $ei(content_i)$ of the social article $content_i$ by calculating a weighted average of the event similarity $cos\_sim(content_i, event_j)$ and the influence correction amount $pei(event_j)$ of the related news event $event_j$ using the following equation (5). In other words, the event influence correction amount $ei(content_i)$ is a weighted aggregate of the influence of all of the news events $event_j$ related to the social article $content_i$. The equation (5) is shown as below:

$$ei(content_k) =$$

$$\begin{cases} 0, & if\ |RE_i| = 0 \\ \sum_{\forall event_j \in RE_i} \left( pei(event_j) * \dfrac{\cos\_sim(content_i, event_l)}{\sum_{event_l \in RE_i} \cos\_sim(content_i, event_l)} \right), & else \end{cases} \qquad Equation\ (5)$$

Wherein, $RE_i$ represents a set composed of all of the news events $event_j$ related to the social article $content_i$.

In step S510, the second influence correction amount generating unit 112 exports the event influence correction amount $ei(content_i)$ to the calculating unit 113 to provide to the calculating unit 113 conducing the subsequent calculation.

Please refer to FIG.4 again, the calculating unit 113 receives the basic influence $bci(content_i)$, the author's general influence correction amount $agi(content_i)$, and the author's domain influence correction amount $adi(content_i)$

$$pi(content_i) =$$

$$bci(content_i) + \max(agi(content_i), adi(content_i)) + ei(content_i) \qquad Equation \ (6)$$

to calculate the prediction influence $pi(content_i)$ according to the following equation (6):

Accordingly, when the author's general influence correction amount $agi(content_i)$ is larger than the author's domain influence correction amount $adi(content_i)$, the calculating unit 113 sums the basic influence $bci(content_i)$, the author's general influence correction amount $agi(content_i)$, and the event influence correction amount $ei(content_i)$ into as the prediction influence $pi(content_i)$. When the author's general influence correction amount $agi(content_i)$ is smaller than the author's domain influence correction amount $adi(content_i)$, the calculating unit 113 sums the basic influence $bci(content_i)$, the author's domain influence correction amount $adi(content_i)$, and the event influence correction amount $ei(content_i)$ into as the prediction influence $pi(content_i)$.

It is worth mentioning that, the method of the calculating unit 113 calculating the prediction influence $pi(content_i)$ may be changed depending on the prediction module 11 having different structures. When the prediction influence $pi(content_i)$ does not include the first influence correction amount generating unit 111, the prediction module 11 only incorporates the recent news event $event_j$ into consideration to generate the prediction influence $pi(content_i)$. At this time, the calculating unit 113 sums the basic influence $bci(content_i)$ and the event influence correction amount $ei(content_i)$ into as the prediction influence $pi(content_i)$.

Either, when the prediction influence $pi(content_i)$ does not include the second influence correction amount generating unit 112, the prediction module 11 only incorporates the author's influence into consideration to generate the prediction influence $pi(content_i)$. At this time, the calculating unit 113 sums the basic influence $bci(content_i)$ and the larger one between the author's general influence correction amount $agi(content_i)$ and the author's domain influence correction amount $adi(content_i)$ into as the prediction influence $pi(content_i)$.

In other embodiments, the calculating unit 113 also can predict a deviation between the basic influence $bci(content_i)$ and an actual influence using a regression model, and correct the prediction influence $pi(content_i)$ by the deviation, such that the prediction influence $pi(content_i)$ will approache to the actual influence.

Specifically, the calculating unit 113 builds the regression model by using the past historical article being as a reference. Then, the calculating unit 113 composes the author's general influence correction amount $agi(content_i)$, the author's domain influence correction amount $adi(content_i)$, and the event influence correction amount $ei(content_i)$ into an independent variable value, and corrects the deviation between the basic influence $bci(content_i)$ and the actual influence to obtain the accurate prediction influence $pi(content_i)$.

Finally, the calculating unit 113 exports the prediction influence $pi(content_i)$ to the bulletin list generating module 13 (as shown in FIG. 1), and the bulletin list generating module 13 generates the bulletin object list to inform the corresponding entity.

In summary, the beneficial effect of the instant disclosure is that, the embodiment of this instant disclosure provides the method of predicting the social article influence and the device using the same can analyze the social article and predict its influence before the social article being spread, so that the entity that need to know the social article can be instantly noticed the related information about the social article.

The method of predicting the social article influence provided from the embodiment of this instant disclosure can incorporate the author of the social article and the recent news event into consideration when predicting the influence of the social article, such that the predicted influence can more approach to the actual influence. Furthermore, the method of predicting the social article influence provided from the embodiment of this instant disclosure also consider the content domain, the domain issue, the emotional polarity, and the emotional strength of the social article to determine if the social article needs an emergency treatment.

The descriptions illustrated supra set forth simply the preferred embodiments of the instant disclosure; however, the characteristics of the instant disclosure are by no means restricted thereto. All changes, alterations, or modifications conveniently considered by those skilled in the art are deemed to be encompassed within the scope of the instant disclosure delineated by the following claims.

**Claims**

1. A method of predicting a social article influence which is adapted to predict a prediction influence $(pi(content_i))$ of the social article $(content_i)$, wherein the prediction influence $(pi(content_i))$ is an estimate value of an interaction amount obtained from the social article $(content_i)$, comprising following steps:

   a) analyzing an issue on the social article $(content_i)$ to classify the social article $(content_i)$ into a content domain that the social article (content$_i$) belongs;

b) calculating a term weight of a plurality of terms in the social article (content$_i$) to obtain a basic influence (bci(content$_i$)) according to the term weight, wherein the basic influence (bci(content$_i$)) is an initial estimate value of the interaction amount obtained from the social article (content$_i$) being published after a first predetermined time;

c) collecting an author's at least one author's historical article in the social article (content$_i$), calculating a first influence average value according to the interaction amount of the author's historical article, and subtracting the first influence average value and a first reference influence average value to obtain an author's general influence correction amount (agi(content$_i$)), wherein the first reference influence average value is an average value of the interaction amount of all of the historical articles;

d) selecting the author's at least one author-domain historical article in the content domain, calculating a second influence average value according to the interaction amount of the author-domain historical article, and subtracting the second influence average value and a second reference influence average value to obtain an author's domain influence correction amount (adi(content$_i$)), wherein the second reference influence average value is an average value of the interaction amount of all of the historical articles in the content domain; and

e) calculating the prediction influence (pi(content$_i$)) according to the basic influence (bci(content$_i$)), the author's general influence correction amount (agi(content$_i$)), and the author's domain influence correction amount (adi(content$_i$)).

2. The method of predicting the social article influence as claimed in claim 1, wherein the step a) further comprises following steps:

a-1) analyzing the terms of the social article (content$_i$) to determine the terms belonging to an emotional term or a negative term, wherein the emotional term is divided into a positive emotional term and a negative emotional term;

a-2) sorting the emotional term or the negative term in the social article (content$_i$) to determine an emotional polarity of the social article (content$_i$); and

a-3) determining an emotional strength according to appearance proportions of the positive emotional term or the negative emotional term in the social article (content$_i$).

3. The method of predicting the social article influence as claimed in claim 1, wherein the step b) calculates the term weight of the terms according to a method of term frequency-inverse document frequency to arrange the term weight of the terms, so as to obtain a plurality of representative terms of the social article (content$_i$); wherein the step b) further comprises following steps:

b-1) obtaining at least one reference historical article having a representative term which is at least one of the representative terms of the social article (content$_i$) within a second predetermined time before publishing the social article (content$_i$);

b-2) calculating an average influence of the representative terms of the social article (content$_i$) before publishing the social article (content$_i$) according to the interaction amount of the reference historical article; and

b-3) obtaining the basic influence (bci(content$_i$)) of the social article (content$_i$) by calculating a weighted average of the term weight of the representative terms and the corresponding average influence.

4. The method of predicting the social article influence as claimed in claim 1, further comprising following steps:

f) determining at least one news events that the social article (content$_i$) belongs according to the term weight of the terms, and calculating an event influence correction amount (ei(content$_i$)) according to the news events, wherein the news events includes at least one news item which has an identical feature with the social article (content$_i$); and

g) calculating the prediction influence (pi(content$_i$)) according to the basic influence (bci(content$_i$)), the author's general influence correction amount (agi(content$_i$)), the author's domain influence correction amount (adi(content$_i$)), and the event influence correction amount (ei(content$_i$));

wherein the step f) further comprises following steps:

f-1) respectively calculating the term weight of the plurality of terms in the at least one news item;

f-2) determining an article similarity between the at least one news item according to the term weight;

f-3) comparing a published time between the at least one news item to calculate a published interval between the at least one news item;

f-4) sorting the article similarity being larger than or equal to a minimum similarity and the published interval being lower than a minimum interval in the at least one news item into a news event;

f-5) obtaining a centroid vector of the news event by summing and averaging the term weight of all of the news items in the news event;

f-6) calculating an event similarity between the social article ($content_i$) and the news event according to the term weight of the social article ($content_i$) and the centroid vector of the news event, obtaining a time interval by comparing a difference of a published time between the social article ($content_i$) being published and the news item being latest published in the news event, and selecting the news event related to the social article ($content_i$) according to the event similarity and the time interval;

f-7) obtaining at least one historical article related to the news event within a third predetermined time before publishing the social article ($content_i$), and calculating a third influence average value of the news event according to the interaction amount of the related historical article;

f-8) subtracting the third influence average value of the news event and a third reference influence average value to obtain an influence correction amount of the news event, wherein the third reference influence average value is an average value of the interaction amount of all of the historical articles within the third predetermined time before publishing the social article ($content_i$); and

f-9) obtaining the event influence correction amount ($ei(content_i)$) of the social article ($content_i$) by calculating a weighted average of the event similarity and the influence correction amount.

5.  The method of predicting the social article influence as claimed in claim 4, wherein the step g) further comprises following steps:

    g-1) when the author's general influence correction amount ($agi(content_i)$) being larger than the author's domain influence correction amount ($adi(content_i)$), summing the basic influence ($bci(content_i)$), the author's general influence correction amount ($agi(content_i)$), and the event influence correction amount ($ei(content_i)$) into as the prediction influence ($pi(content_i)$); and

    g-2) when the author's general influence correction amount ($agi(content_i)$) being smaller than the author's domain influence correction amount ($adi(content_i)$), summing the basic influence ($bci(content_i)$), the author's domain influence correction amount ($adi(content_i)$), and the event influence correction amount ($ei(content_i)$) into as the prediction influence ($pi(content_i)$).

6.  The method of predicting the social article influence as claimed in claim 4, wherein the step g) further comprises following steps:

    g-1') building a regression model, composing the author's general influence correction amount ($agi(content_i)$), the author's domain influence correction amount ($adi(content_i)$), and the event influence correction amount ($ei(content_i)$) into an independent variable value, and predicting a deviation between the basic influence ($bci(content_i)$) and an actual influence to obtain the prediction influence ($pi(content_i)$).

7.  The method of predicting the social article influence as claimed in claim 1, further comprising following steps:

    h) building an association model among a plurality of entities according to at least one expert knowledge, at least one internet information, or the at least one historical article, wherein the plurality of entities are associated with the social article ($content_i$);

    i) classifying the social article ($content_i$) into a domain issue that the social article ($content_i$) belongs; and

    j) generating a bulletin object list according to the domain issue, the prediction influence ($pi(content_i)$), and the association model, wherein the bulletin object list includes at least one of the entities.

8.  The method of predicting the social article influence as claimed in claim 7, wherein the step j) further comprises following steps:

    j-1) analyzing a certain historical article having the domain issue, the prediction influence ($pi(content_i)$), and the association model to determine an emergency level of a certain entity with regard to the social article ($content_i$), and generating the bulletin object list according to an above determination result, wherein the certain historical article has a high influence for the certain entity.

9.  A device of predicting a social article influence which is adapted to predict a prediction influence ($pi(content_i)$) of the social article ($content_i$), wherein the prediction influence ($pi(content_i)$) is an estimate value of an interaction amount obtained from the social article (content$_i$), comprising:

an analysis module (10) being used for conducting an issue analysis on the social article (content$_i$) to classify the social article (content$_i$) into a content domain that the social article (content$_i$) belongs;

a prediction module (11) being used for generating the prediction influence (pi(content$_i$)) comprising;

a basic influence estimating unit (110) coupling to the analysis module (10), and being used for calculating a term weight of a plurality of terms in the social article (content$_i$) to obtain a basic influence (bci(content$_i$)) according to the term weight, wherein the basic influence (bci(content$_i$)) is an initial estimate value of the interaction amount obtained from the social article (content$_i$) being published after a first predetermined time;

a first influence correction amount generating unit (111) coupling to the analysis module (10), and being used for generating an author's general influence correction amount (agi(content$_i$)) and an author's domain influence correction amount (adi(content$_i$)); and

a calculating unit (113) coupling to the basic influence estimating unit (110) and the first influence correction amount generating unit (111), and being used for calculating the prediction influence (pi(content$_i$)) according to the basic influence (bci(content$_i$)), the author's general influence correction amount (agi(content$_i$)), and the author's domain influence correction amount (adi(content$_i$));

wherein the first influence correction amount generating unit (111) is used for collecting an author's at least one author's historical article in the social article (content$_i$), calculating a first influence average value according to the interaction amount of the author's historical article, and subtracting the first influence average value and a first reference influence average value to obtain the author's general influence correction amount (agi(content$_i$)), wherein the first reference influence average value is an average value of the interaction amount of all of the historical articles;

wherein the first influence correction amount generating unit (111) is used for selecting the author's at least one author-domain historical article in the content domain, calculating a second influence average value according to the interaction amount of the author-domain historical article, and subtracting the second influence average value and a second reference influence average value to obtain the author's domain influence correction amount (adi(content$_i$)), wherein the second reference influence average value is an average value of the interaction amount of all of the historical articles in the content domain.

10. The device of predicting the social article influence as claimed in claim 9, wherein the analysis module (10) analyzes the terms of the social article (content$_i$) to determine the terms belonging an emotional term or a negative term, wherein the emotional term is divided into a positive emotional term and a negative emotional term; the analysis module (10) sorts the emotional term or the negative term in the social article (content$_i$) to determine an emotional polarity of the social article (content$_i$), and the analysis module (10) determines an emotional strength according to appearance proportions of the positive emotional term or the negative emotional term in the social article (content$_i$).

11. The device of predicting the social article influence as claimed in claim 9, wherein the basic influence estimating unit (110) calculates the term weight of the terms according to a method of term frequency-inverse document frequency to arrange the term weight of the terms, so as to obtain a plurality of representative terms of the social article (content$_i$); wherein the basic influence estimating unit (110) obtains at least one reference historical article from a historical article database (2) within a second predetermined time before publishing the social article (content$_i$), the at least one reference historical article has a representative term which is at least one of the representative terms of the social article (content$_i$); the basic influence estimating unit (110) calculates an average influence of the representative terms of the social article (content$_i$) before publishing the social article (content$_i$) according to the interaction amount of the reference historical article; and the basic influence estimating unit (110) obtains the basic influence (bci(content$_i$)) of the social article (content$_i$) by calculating a weighted average of the term weight of the representative terms and the corresponding average influence.

12. The device of predicting the social article influence as claimed in claim 9, further comprises:

a second influence correction amount generating unit (112) coupling to the analysis module (10) and the calculating unit (113), being used for determining at least one news events that the social article (content$_i$) belongs according to the term weight of the terms, and calculating an event influence correction amount (ei(content$_i$)) according to the news events, wherein the news events includes at least one news item which has an identical feature with the social article (content$_i$);

wherein the second influence correction amount generating unit (112) exports the event influence correction amount (ei(content$_i$)) to the calculating unit (113), and calculates the prediction influence (pi(content$_i$)) according to the basic influence (bci(content$_i$)), the author's general influence correction amount (agi(content$_i$)), the author's

domain influence correction amount ($adi(content_i)$), and the event influence correction amount ($ei(content_i)$); wherein the second influence correction amount generating unit (112) respectively calculates the term weight of the plurality of terms in the at least one news item, and determines an article similarity between the at least one news item according to the term weight; the second influence correction amount generating unit (112) compares a published time between the at least one news item to calculate a published interval between the at least one news item; and the second influence correction amount generating unit (112) sorts the article similarity being larger than or equal to a minimum similarity and the published interval being lower than a minimum interval in the at least one news item into a news event;

wherein the second influence correction amount generating unit (112) sums and averages the term weight of all of the news items in the news event to obtain a centroid vector of the news event; the second influence correction amount generating unit (112) calculates an event similarity between the social article ($content_i$) and the news event according to the term weight of the social article ($content_i$) and the centroid vector of the news event, obtains a time interval by comparing a difference of a published time between the social article ($content_i$) being published and the news item being latest published in the news event, and selects the news event related to the social article ($content_i$) according to the event similarity and the time interval; the second influence correction amount generating unit (112) obtains at least one historical article related to the news event within a third predetermined time before publishing the social article ($content_i$), calculates a third influence average value of the news event according to the interaction amount of the related historical article; the second influence correction amount generating unit (112) subtracts the third influence average value of the news event and a third reference influence average value to obtain an influence correction amount of the news event, wherein the third reference influence average value is an average value of the interaction amount of all of the historical articles within the third predetermined time before publishing the social article ($content_i$); and the second influence correction amount generating unit (112) obtains the event influence correction amount ($ei(content_i)$) of the social article ($content_i$) by calculating a weighted average of the event similarity and the influence correction amount.

13. The device of predicting the social article influence as claimed in claim 12, wherein when the author's general influence correction amount ($agi(content_i)$) is larger than the author's domain influence correction amount ($adi(content_i)$), the calculating unit (113) sums the basic influence ($bci(content_i)$), the author's general influence correction amount ($agi(content_i)$), and the event influence correction amount ($ei(content_i)$) into as the prediction influence ($pi(content_i)$); and when the author's general influence correction amount ($agi(content_i)$) is smaller than the author's domain influence correction amount ($adi(content_i)$), the calculating unit (113) sums the basic influence ($bci(content_i)$), the author's domain influence correction amount ($adi(content_i)$), and the event influence correction amount ($ei(content_i)$) into as the prediction influence ($pi(content_i)$).

14. The device of predicting the social article influence as claimed in claim 9, wherein the device of predicting the social article influence further comprises:

an association module (12) coupling to the analysis module (10) and an entity association database (3) used for building an association model among a plurality of entities according to at least one expert knowledge, at least one internet information, or the at least one historical article provided from the entity association database (3), wherein the plurality of entities are associated with the social article ($content_i$); and

a bulletin list generating module (13) coupling to the analysis module (10), the prediction module (11), and the association module (12) used for generating a bulletin object list according to a domain issue that the social article ($content_i$) belongs provided from the analysis module (10), the prediction influence ($pi(content_i)$) provided from the prediction module (11), and the association model provided from the association module (12), wherein the bulletin object list includes at least one of the entities.

15. The device of predicting the social article influence as claimed in claim 14, wherein the bulletin list generating module (13) determines if the domain issue of the social article ($content_i$), the prediction influence ($pi(content_i)$), and the association model meet a specified criteria, wherein the specified criteria includes an expected influence threshold, at least one specified issue, and at least one specified entity; and when the prediction influence ($pi(content_i)$) of the social article ($content_i$) is larger than the expected influence threshold, the domain issue of the social article ($content_i$) appears in the specified issue, and the association model of the social article ($content_i$) includes the specified entity, the bulletin list generating module (13) generates the bulletin object list to notice the entity corresponding to the specified criteria.

entity association
database —— 3

association —— 12
module
                    10          13
content$_i$ ——►  analysis   bulletin list    ——► instantly notification
                  module    generating
                             module
                                              —— 1
prediction —— 11
module

                    2
historical article
database

FIG.1

receiving social article — S10

analyzing issue to classify the social article into the content domain and the domain issue that the social article belongs — S20

predicting the influence of the social article — S30

building the association model — S40

generating the bulletin object list according to the domain issue, the prediction influence, and the association model of the social article — S50

informing to the corresponding entity according to the bulletin list — S60

FIG.2

S203

analyzing the term in the social article, and determining the terms in the social article belonging to an emotional term or a negative term

S201

classifying the content domain of the social article depending on the source of the social article, or classifying the content domain of the social article using a classification algorithm

S204

sorting the emotional term or the negative term in the social article to determine an emotional polarity of the social article

S202

classifying the domain issue of the social article using the classification algorithm

S205

determining an emotional strength according to appearance proportions of the positive emotional term or the negative emotional term in the social article

S206

exporting content domain, domain issue, emotional polarity, and emotional strength of the social article

FIG.3

FIG.4

calculating the term weight of the plurality of terms in the social article — S301

arranging the term weights to obtain at least one term weight of the social article — S302

obtaining the reference historical article having the at least one representative terms of the social article within a second predetermined time before publishing the social article — S303

calculating an average influence of the representative terms of the social article according to the interaction amount of the reference historical article — S304

obtaining the basic influence of the social article by calculating a weighted average of the term weights of the representative terms and the corresponding average influence — S305

exporting the basic influence — S306

FIG.5

collecting the author's historical articles published by the author in the social article, and obtaining a first influence average value by calculating the interaction amount of the author's historical articles ⟞ S401

subtracting the first influence average value and a first reference influence average value to obtain the author's general influence correction amount ⟞ S402

selecting the author-domain historical article in the content domain, and obtaining a second influence average value by calculating the interaction amount of the author-domain historical article ⟞ S403

subtracting the second influence average value and a second reference influence average value to obtain an author's domain influence correction amount ⟞ S404

exporting the author's general influence correction amount and the author's domain influence correction amount ⟞ S405

FIG.6

respectively calculating the term weight of the plurality of terms in the plurality of news items —S501

determining an article similarity between the different news items according to the term weight —S502

comparing a published time between the different news items to calculate a published interval —S503

sorting the article similarity of the news items which is larger than or equal to the minimum similarity and the published interval which is lower than the minimum interval of the news items into the news event —S504

summing and averaging the term weights of all of the news items in the news event to obtain a centroid vector of the news event —S505

calculating the event similarity between the social article and the news event according to the term weight of the social article and the centroid vector of the news event, obtaining a time interval by comparing a difference of the published time between the social article being published and the news item being latest published in the news event, and selecting the news event according to the event similarity and the time interval —S506

obtaining the historical article related to the news event within a third predetermined time before publishing the social article, and calculating a third influence average value of the news events according to calculating the interaction amount of the related historical article —S507

subtracting the third influence average value and the third reference influence average value of the related historical article of the news event to obtain an influence correction amount of the news event —S508

obtaining the event influence correction amount of the social article by calculating a weighted average of the event similarity and the influence correction amount of the related news event —S509

exporting the event influence correction amount —S510

FIG.7

Europäisches
Patentamt

European
Patent Office

Office européen
des brevets

# EUROPEAN SEARCH REPORT

Application Number

EP 15 19 9777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/040277 A1 (ASUR SITARAM [US] ET AL) 6 February 2014 (2014-02-06) * the whole document * ----- | 1-15 | INV. G06Q50/00 G06F17/30 |
|  |  |  | TECHNICAL FIELDS SEARCHED (IPC) |
|  |  |  | G06Q G06F |

The present search report has been drawn up for all claims

| Place of search | Date of completion of the search | Examiner |
|---|---|---|
| Munich | 18 January 2016 | Härdeman, David |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 19 9777

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2016

| Patent document cited in search report | Publication date | Patent family member(s) | Publication date |
|---|---|---|---|
| US 2014040277 A1 | 06-02-2014 | NONE | |

EPO FORM P0459

For more details about this annex : see Official Journal of the European Patent Office, No. 12/82